# EUROPÄISCHE PATENTSCHRIFT

(11) **EP 0 453 708 B1**
(45) Veröffentlichungstag und Bekanntmachung des Hinweises auf die Patenterteilung: **07.12.1994**
(21) Anmeldenummer: 91100546.0
(22) Anmeldetag: 18.01.1991
(51) Int. Cl.: G01F 23/14, G01F 17/00

(54) **Vorrichtung zum Messen des Füllstandes in einem Kraftstofftank**
Level measuring apparatus for gasoline tanks
Appareil de mesure du niveau pour réservoirs d'essence

(30) Priorität: 21.04.1990 DE 4012767
(43) Veröffentlichungstag der Anmeldung: 30.10.1991
(73) Patentinhaber: PIERBURG GMBH, 41460 Neuss (DE)
(72) Erfinder: Härtel, Günter, W-4040 Neuss 21 (DE)

(56) Entgegenhaltungen:
- DE-A- 2 937 966
- DE-A- 3 717 638
- DE-A- 3 721 546
- DE-C- 695 876
- DE-C- 2 953 903

## Beschreibung

Die Erfindung betrifft eine Vorrichtung zum Messen des Anteils von flüssigem Brennstoff in einem Brennstofftank nach dem Oberbegriff des Patentanspruchs 1.

Eine derartige Vorrichtung ist Gegenstand der DE-C2 29 53 903, und es ist bekannt, zum Bestimmen des Brennstoff-Füllstandes aus einer Kolbenbewegung auf den tatsächlichen Füllstand zu schließen, wobei zum Erfassen des jeweiligen Kolbenhubes als Füllstandsgröße ein Wegaufnehmer vorgesehen ist.

Um die Verdampfungsemissionen aus dem Tank zu reduzieren werden Brennstofftanks von Kraftfahrzeugen zunehmend mit einem Überdruckregelventil versehen. Je nach Brennstoffsiedelage und -temperatur stellt sich im Tank Brennstoffdampf mit unterschiedlich hohem Druck ein, da das Überdruckregelventil im Bereich des Atmosphärendruckes zunächst geschlossen bleibt. Erst beim Überschreiten des Ventilschaltpunktes wird der Brennstoffdampf zur Atmosphäre bzw. zu einem Aktivkohlebehälter abgeführt, wodurch sich im Tank ein Druck einstellt, der dem Schaltpunkt des Überdruckregelventils entspricht.

Da dieses Überdruckregelventil unabhängig von der Stellung des Kolbens der erwähnten Vorrichtung arbeitet, d. h. das aus der DE-C2 29 53 903 bekannte Belüftungsventil wird nicht mehr benutzt, ergeben sich für die Messung Störeinflüsse durch variierende Tankdrücke, wodurch die Vorrichtung bis zu dem geregelten Druck bzw. Schaltpunktdruck ungenau arbeitet.

Es ist daher Aufgabe der Erfindung, eine gattungsgemäße Vorrichtung derart zu gestalten, daß Druckänderungen ohne Einfluß auf das Meßergebnis bleiben.

Diese Aufgabe ist bei der angegebenen Vorrichtung durch die im Kennzeichen des Patentanspruchs 1 angegebenen Merkmale gelöst worden. Die Unteransprüche nennen vorteilhafte Weiterbildungen der Erfindung.

Mit der Erfindung erzielbare Vorteile sind in der nachfolgenden Beschreibung zweier Ausführungen angegeben, die in der Zeichnung dargestellt sind.

Diese zeigt:
Fig. 1 eine erfindungsgemäße Vorrichtung;
Fig. 2 die Vorrichtung nach Fig. 1 mit Druckspeicher.

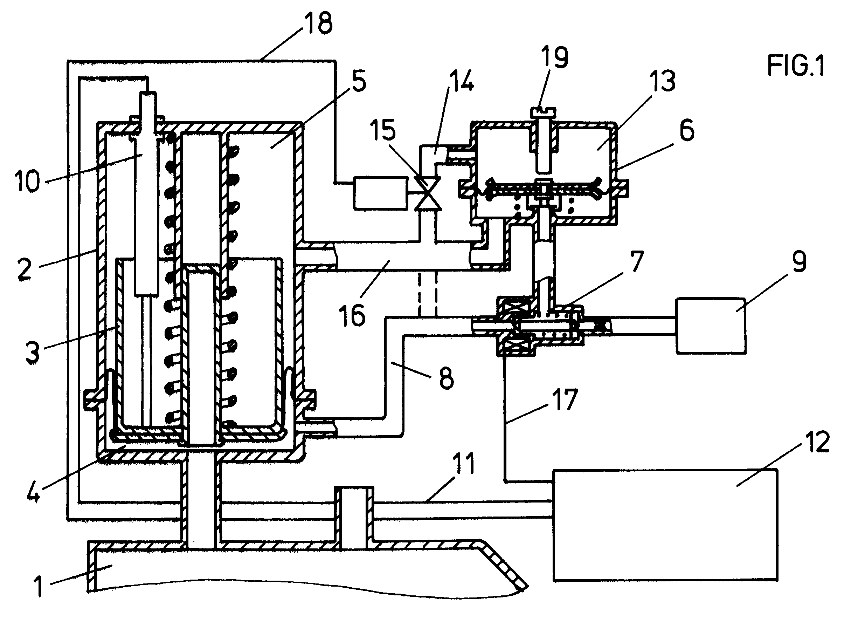

Fig. 1 zeigt eine Ausführung der erfindungsgemäßen Vorrichtung an einem Brennstofftank 1, an dem ein Meßzylinder 2 angeordnet ist, der durch einen Kolben 3 in zwei Teilkammern 4, 5 unterteilt ist. Die erste Teilkammer 4 ist an den gasgefüllten Tankraum 1 angeschlossen und die zweite Teilkammer 5 über einen Druckregler 6 und ein Umschaltventil 7 entweder an den gasgefüllten Tankraum 1 bzw. einer mit diesem verbundenen Leitung 8 oder, je nach Schaltstellung des Umschaltventils 7, mit einer Unterdruckquelle 9, z. B. dem Saugrohr einer Brennkraftmaschine (nicht dargestellt), verbunden.
In der zweiten Teilkammer 5 ist ein Wegaufnehmer 10 für den Kolben 3 angeordnet, dessen Ausgangssignal über eine elektrische Leitung 11 einem elektronischen Steuergerät 12 zugeführt wird.
Der Druckregler 6 weist eine Membrankammer 13 auf, die über eine Leitung 14, in der ein Absperrventil 15 angeordnet ist, mit einer den Druckregler 6 mit der Teilkammer 5 verbindenden Leitung 16 verbunden ist oder alternativ (gestrichelt dargestellt) mit dem Tankraum 1 bzw. der mit diesem verbundenen Leitung 8. Umschaltventil 7 und Absperrventil 15 sind über elektrische Leitungen 17, 18 ebenfalls mit dem Steuergerät 12 verbunden.

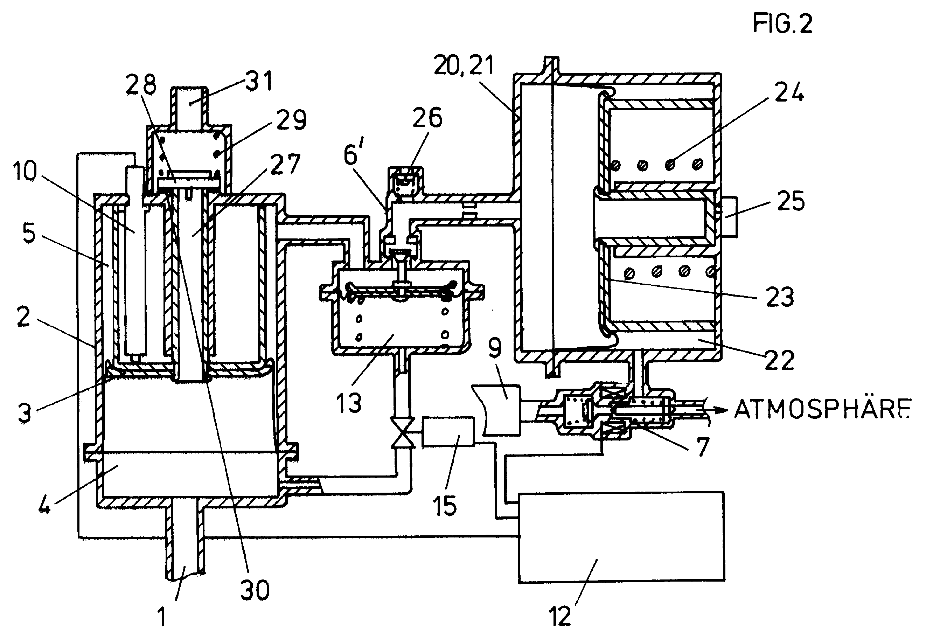

Fig. 2 zeigt eine Ausführung, bei der der Meßzylinder 2 für den Anschluß an eine gegenüber der Atmosphäre Überdruck erzeugenden Druckquelle ausgebildet ist. Die Druckquelle 20 wird hier von einem Druckspeicher 21 gebildet, der durch niedrigen Druck, z. B. dem des Saugrohrs der Brennkraftmaschine, gespannt wird. Es versteht sich, daß bei Betrieb des Meßzylinders 2 mit Überdruck der Druckregler 6′ umgekehrt arbeitet wie der Druckregler 6 der Fig. 1, d. h. die Ventilöffnung erfolgt umgekehrt, fallender Druck gegenüber dem der Membrankammer 13 bewirkt die Öffnung des Ventils.

### Funktion

Die Vorrichtung nach Fig. 1 ist in Ruhestellung des Kolbens 3 dargestellt, in der das Umschaltventil 7 den Durchgang des Druckes der Unterdruckquelle 9 gesperrt und den Durchgang des Druckes im gasgefüllten Tankraum 1 bzw. der Leitung 8 freigegeben hat, so daß der Tankraumdruck die eine Seite der Membrane des Druckreglers 6 beaufschlagt. Das Absperrventil 15 ist geöffnet, so daß auch die andere Seite der Membrane bzw. die Menbrankammer 13 über die Leitung 16 (oder direkt über die Leitung 8) mit diesem Druck beaufschlagt ist. Das Druckregelventil ist durch Federkraft geöffnet, so daß der Tankraumdruck in die zweite Teilkammer 5 des Meßzylinders 2 gelangt. Da auch die erste Teilkammer 4 mit diesem Druck beaufschlagt ist, befindet sich der Kolben 3 unter Feder- und/oder Schwerkraft in seiner Ruhestellung.

Bei einer Messung gibt das Steuergerät 12 gleichzeitig über die elektrischen Leitungen 17, 18 Signale an das Umschaltventil 7 und das Absperrventil 15 aus, wodurch das Umschaltventil 7 den Durchgang des Unterdruckes freigibt und den des Tankraumdruckes sperrt und das Absperrventil 15 schließt und die Membrankammer 13 hermetisch verschließt. Nicht dargestellte Überdruckventile bzw. Belüftungsleitungen des Brennstofftanks werden geschlossen.
Die hermetisch verschlossene Membrankammer 13 wirkt nun in bezug auf die Membranbewegung als Gasfeder, die sich der Schließung des Druckregelventils 6 durch den an der Membrane wirkenden Unterdruck widersetzt, so daß sich ein Regeldruck einstellt, der durch den Differenzdruck zwischen dem Druck in der Membrankammer 13 und dem geregelten Druck bestimmt ist. Dieser Differenzdruck ist ggf. durch eine Schraube 19, die die Anschlagstellung der Membrane bei unverschlossener Membrankammer 13 bestimmt, einstellbar. Der geregelte Druck gelangt in die zweite Teilkammer 5, so daß der Kolben 3 aus seiner Ruhestellung bewegt wird. Bei dieser Bewegung saugt der Kolben 3 Gas aus dem Tankraum 1 bzw. vergrößert der Kolben 3 den gasgefüllten Tankraum 1, wodurch der im Tankraum herrschende Druck im Verhältnis der Volumenvergrößerung sinkt, bis in etwa Druckgleichheit in den Teilkammern 4, 5 bzw. Gleichgewicht der an der Membrane wirkenden Kräfte (Federkraft, Gewicht des Kolbens, Druckdifferenz usw.) besteht und die Kolbenbewegung beendet ist bzw. unter einen festgelegten Betrag pro Zeiteinheit abgefallen ist. Der Kolbenweg wird durch den Wegaufnehmer 10 erfaßt und dem Steuergerät 12 über die elektrische Leitung 11 zugeführt und in diesem zu einem Ausgangssignal verarbeitet, das die Anzeige des Anteils von flüssigem Brennstoff im Tank ermöglicht.

Sobald dieses Ausgangssignal vorliegt, kann der Meßvorgang abgebrochen werden. Dafür werden vom Steuergerät 12 Signale an das Umschaltventil 7 und das Absperrventil 15 ausgegeben, so daß das Umschaltventil 7 den Durchgang des Unterdrucks sperrt und den des Tankraumdruckes öffnet und das Absperrventil 15 öffnet, so daß der Druck der Membrankammer 13 auf die andere Membranseite durchschlagen kann, woraufhin das Druckregelventil 6 öffnet und beide Teilkammern 4, 5 des Meßzylinders 2 wieder mit dem gleichen Tankraumdruck beaufschlagt sind. Hierdurch bewegt sich der Kolben 3 unter Feder- und/oder Schwerkraft in seine Ruhestellung.

Bei der Vorrichtung nach Fig. 2 wird der Meßzylinder 2 mit einer Druckquelle anstelle einer Unterdruckquelle beaufschlagt. Die Funktion wird ebenfalls anhand der Fig. 2 beschrieben. Die Fig. 2 zeigt den Kolben 3 in Ruhestellung, die der Kolben entgegen Feder- und/oder Schwerkraft unter der Wirkung von Unterdruck in der zweiten Teilkammer 5 eingenommen hat. Dieser Unterdruck entstand durch Anschluß einer Arbeitskammer 22 des Druckspeichers 21 an die Unterdruckquelle, z. B. das Saugrohr 9, über das Umschaltventil 7, wodurch ein Kolben 23 des Druckspeichers 21 gegen eine Feder 24 bewegt und dadurch Luft aus der Teilkammer 5 über das geöffnete Druckregelventil 6 abgesaugt wurde. Der Kolben 23 des Druckspeichers 21 ist in seiner gespannten Stellung dargestellt, wobei diese Endstellung ggf. durch einen Endlagenschalter 25 an das Steuergerät 12 gemeldet wird. Der in der Teilkammer 5 wirkende Unterdruck ist durch ein Belüftungsventil 26 begrenzt, womit sichergestellt ist, daß der Druckspeicher 21 ausreichend Luft speichern kann. Aus dieser Stellung erfolgt die Messung durch Schalten des Umschaltventils 7 auf Durchgang für Atmosphärenluft, wodurch sich der Druckspeicher 21 entspannt und dabei die gespeicherte Luft komprimiert und über das Druckregelventil 6′ in die Teilkammer 5 drückt. Das Druckregelventil 6′ war, wie bei der Ausführung nach Fig. 1, bis zum Beginn der Messung mit der Membrankammer 13 an den gasgefüllten Tankraum 1 angeschlossen, wobei wie zu Fig. 1 beschrieben, die Membranstellung bei unverschlossener Membrankammer durch eine Einstellschraube bestimmt ist, und die Membrankammer 13 wurde zu Beginn der Messung durch das Absperrventil 15 hermetisch abgeschlossen, mit der gleichen Wirkung wie in Fig. 1 beschrieben.
Der vom Druckspeicher 21 bereitgestellte Druck wird durch das Druckregelventil 6′ auf einen vorgegebenen über Tankraumdruck liegenden Betrag geregelt und der Kolben 3 im Meßzylinder 2 durch diesen Druck bewegt, bis sich am Kolben 3 Druckgleichheit bzw. Gleichgewicht der an der Membrane wirkenden Kräfte (Federkraft, Druckdifferenz) einstellt und dadurch die Bewegung beendet wird bzw. unter einen festgelegten Betrag pro Zeiteinheit abgefallen ist. Die Kolbenbewegung wird über den Wegaufnehmer 10 erfaßt, dem Steuergerät 12 gemeldet und im Steuergerät 12 ausgewertet, wie zu Fig. 1 beschrieben.

Nach beendeter Messung wird das Umschaltventil 7 geschaltet und der Druckspeicher 21 mit Unterdruck beaufschlagt, so daß die dargestellten Positionen der Kolben 3 und 23 des Meßzylinders und des Druckspeichers eingenommen werden, wobei der Endlagenschalter 25 Meßbereitschaft meldet.

Es versteht sich, daß die Ausführung nach Fig. 1 ebenfalls mit einem Druckspeicher betrieben werden kann, wobei dieser dann als Unterdruckspeicher ausgeführt ist, d. h. die Messung erfolgt dann mit der Unterdruckbeaufschlagung des Unterdruckspeichers. Zur Vermeidung von dynamischen Effekten können in den Leitungen Drosselabschnitte vorgesehen sein. Die Auswertung der Wegaufnehmersignale kann in beliebiger Weise erfolgen, z. B. kann diese auch bereits bei hinreichend verlangsamter Kolbenbewegung (Gradient: Membranweg/Zeit) erfolgen.

In Ausgestaltung der Erfindung ist es möglich, das nicht dargestellte Überdruckventil in den Meßzylinder 2 zu integrieren (Fig. 2). Neben einer Verringerung des Bauaufwandes hat dies den Vorteil, daß es während des Meßvorganges zu keiner Überschneidung mit der Überdruckregelung kommt, womit Meßfehler vermieden werden. Hierfür ist eine Kolbenführung 27 als Rohr ausgebildet, das sich in seiner Meßbereitstellung auf einem Schließkörper 28 abstützt. Der Schließkörper 28 wird durch die Kraft einer Feder 29 auf einen Ventilsitz 30 gedrückt. Ab einem bestimmten Differenzdruck zwischen Tankdruck und Teilkammerdruck wird der Schließkörper 28 vom Ventilsitz 30 abgehoben, so daß Überschußdampf aus dem Tankraum 1 über die Teilkammer 4 und das Rohr über einen Anschluß 31 zur Atmosphäre bzw. zu einem Aktivkohlebehälter gelangt.

Beide Vorrichtungen nach Fig. 1 und 2 ermöglichen z. B. im Rahmen einer Borddiagnose eine Prüfung der Brennstofftankdichtheit. Hierbei wird nach vorliegendem Ausgangssignal, das die Anzeige des Anteils flüssigen Brennstoffs im Tank ermöglicht, der Meßvorgang bei geschlossenem Umschaltventil 7 und Absperrventil 15 sowie Überdruckventil bzw. Belüftungsleitungen über eine weitere Zeitspanne aufrechterhalten und eine sich ggf. einstellende Verschiebung des Kolbens pro Zeiteinheit als Maß für eine Entleerung des Brennstofftanks gewertet. Diese Entleerung kann entstehen durch Brennstoffentnahme für die Brennkraftmaschine, Brennstoffleckage aus Tank und Anschlußleitungen und durch Leckage von Brennstoffdampf, die am Umschaltventil 7 und den Überdruckventilen bzw. Belüftungsleitungen des Brennstofftanks bestehen kann.

Die aus der Verschiebung des Kolbens pro Zeiteinheit ermittelte Entleerung des Brennstofftanks ist vorteilhafterweise um den Anteil zu reduzieren, der dem im Steuergerät berechneten Brennstoffverbrauch der Brennkraftmaschine entspricht.

Diese letzte Maßnahme erübrigt sich, wenn der Meßvorgang insgesamt oder nach vorliegendem Ausgangssignal für die Anzeige des flüssigen Brennstoffanteils im Tank bei abgestellter Brennkraftmaschine erfolgt.

Die neue Vorrichtung ermöglicht eine Messung des Füllstandes unabhängig von den vor der Messung im gasgefüllten Tankraum herrschenden Drücken. Insbesondere die Ausführungen mit einem Druck- bzw. Unterdruckspeicher als Druckquelle ermöglichen es, daß bei der Messung keine Ansaugung von Brennstoffdampf in das Saugrohr der Brennkraftmaschine erfolgt, was bisher zu einer Änderung des Mischungsverhältnisses von Luft/Brennstoff führte und kurze Meßzeiten ausschloß. Die neue Vorrichtung ermöglicht z. B. im Rahmen einer Borddiagnose eine Prüfung der Brennstofftankdichtheit.

## Patentansprüche

1. Vorrichtung zum Messen des Anteils von flüssigem Brennstoff in einem Brennstofftank, bestehend aus einem Zylinder (2), der durch einen Kolben (3) in zwei Teilkammern (4,5) unterteilt ist, von denen die erste Teilkammer (4) an den gasgefüllten Tankraum (1) angeschlossen ist und die zweite Teilkammer (5) an eine Druckquelle (9,20) derart anschließbar ist, daß sich der Kolben (3) unter dem Einfluß der Druckquelle (9,20) aus einer definierten Ruhestellung in eine Endstellung bewegt, wobei die dabei bei verschlossenem Brennstofftank auftretende Druckänderung im gasgefüllten Tankraum (1) als Maß für den mit Brennstoff gefüllten Tankraum gewertet wird und in einer die zweite Teilkammer (5) mit der Druckquelle (9,20) verbindenden Leitung ein eine Membran und zwei Membrankammern aufweisendes Druckregelventil (6,6′) angeordnet ist, das den der zweiten Teilkammer (5) zugeführten Druck regelt, dadurch gekennzeichnet, daß eine Membrankammer (13) des Druckregelventils (6,6′) während der Ruhestellung des Kolbens (3) über eine Leitung (8 oder 16) mit dem gasgefüllten Tankraum (1) verbunden ist und durch ein Absperrventil (15) in dieser Leitung (8) während der Bewegung des Kolbens (3) hermetisch verschließbar ist, wobei die hermetisch verschlossene Membrankammer in bezug auf die Membranbewegung als Gasfeder wirkt.

2. Vorrichtung nach Anspruch 1, dadurch gekennzeichnet, daß die Membrankammer (13) mit einer die zweite Teilkammer (5) mit dem Druckregelventil (6) verbindenden Leitung (16) verbunden ist.

3. Vorrichtung nach Anspruch 1, dadurch gekennzeichnet, daß die Druckquelle von einem Druck- bzw. Unterdruckspeicher (21) gebildet wird, der durch niedrigeren Druck (Unterdruck) gespannt wird.

4. Vorrichtung nach Anspruch 1, 2 oder 3, dadurch gekennzeichnet, daß die Membranstellung bei unverschlossener Membrankammer (13) des Druckregelventils (6) durch eine Einstellschraube (19) bestimmt ist.

5. Vorrichtung nach einem der vorstehenden Ansprüche, dadurch gekennzeichnet, daß der Kolben (3) in Ruhe- bzw. Meßbereitstellung auf den Tankraumdruck ansprechend ein Belüftungsventil (28, 30) eines Anschlusses (31) betätigt, der zur Atmosphäre bzw. zu einem Aktivkohlebehälter führt.

6. Vorrichtung nach einem der Ansprüche 1 bis 5, dadurch gekennzeichnet, daß nach vorliegendem Ausgangssignal, das die Anzeige des Anteils flüssigen Brennstoffs im Tank ermöglicht, der Meßvorgang über eine weitere Zeitspanne aufrecht erhalten wird und die sich ggf. einstellende Verschiebung des Kolbens pro Zeiteinheit als Maß für eine Entleerung des Brennstofftanks gewertet wird, die durch Brennstoffentnahme für die Brennkraftmaschine, Brennstoffleckage aus Tank und Anschlußleitungen und durch Leckage von Brennstoffdampf am Umschaltventil (7) und den geschlossenen Überdruckventilen bzw. Belüftungsleitungen des Brennstofftanks hervorgerufen wird.

7. Vorrichtung nach Anspruch 6, dadurch gekennzeichnet, daß die Verschiebung des Kolbens pro Zeiteinheit bzw. das Maß für die Tankentleerung um den Anteil reduziert wird, der dem im Steuergerät berechneten Brennstoffverbrauch der Brennkraftmaschine entspricht.

8. Vorrichtung nach Anspruch 6, dadurch gekennzeichnet, daß der Meßvorgang insgesamt oder nur nach vorliegendem Ausgangssignal für die Anzeige des flüssigen Brennstoffanteils im Tank bei abgestellter Brennkraftmaschine erfolgt.

## Claims

1. A device for measuring the proportion of liquid fuel in a fuel tank, consisting of a cylinder (2) which is subdivided by a piston (3) into two partial chambers (4, 5), of which the first partial chamber (4) is connected to the gas-filled tank space (1) and the second partial chamber (5) is connectable to a pressure source (9, 20) such that the piston (3) moves from a pre-defined rest position into an end position under the effect of the pressure source (9, 20), wherein the change in pressure in the gas-filled tank space (1) occurring when the fuel tank is closed is evaluated as a measure of the fuel-filled tank space, and a pressure control valve (6, 61) having a diaphragm and two diaphragm chambers is arranged in a line connecting the second partial chamber (5) to the pressure source (9, 20), said pressure control valve (6, 61) regulating the pressure supplied to the second partial chamber (5), characterised in that, when the piston (3) is in the rest position, a diaphragm chamber (13) of the pressure control valve (6, 61) is connected to the gas-filled tank space (1) via a line (8 or 16) and is hermetically sealable via a shut-off valve (15) in this line (8) during the movement of the piston (3), wherein the hermetically sealed diaphragm chamber acts as a gas spring in relation to the movement of the diaphragm.

2. A device according to claim 1, characterised in that the diaphragm chamber (13) is connected to a line (16) connecting the second partial chamber (5) to the pressure control valve (6).

3. A device according to claim 1, characterised in that the pressure source is formed by a pressure or underpressure accumulator (21) which is loaded by lower pressure (underpressure).

4. A device according to claim 1, 2 or 3, characterised in that, when the diaphragm chamber (13) of the pressure control valve (6) is unsealed, the diaphragm position is determined by a setting screw (19).

5. A device according to one of the preceding claims, characterised in that, in response to the tank space pressure, the piston (3) in the rest position or ready for measurement position actuates a venting valve (28, 30) of a connection (31) which leads to the atmosphere or to an activated charcoal container.

6. A device according to one of claims 1 to 5, characterised in that, once the output signal, which enables the proportion of liquid fuel in the tank to be displayed, is present, the measuring operation is maintained over a further time interval and the optionally self-adjusting displacement of the piston per time unit is evaluated as a measure of the depletion of the fuel tank, which is caused by removal of fuel for the internal combustion engine, leakage of fuel from the tank and connecting lines and by leakage of fuel vapour at the reversing valve (7) and the closed pressure relief valves or venting lines of the fuel tank.

7. A device according to claim 6, characterised in that the displacement of the piston per time unit or the measure of the tank depletion is reduced by a proportion which corresponds to the fuel consumption of the internal combustion engine calculated in the control apparatus.

8. A device according to claim 6, characterised in that the measuring operation takes place continuously or only once the output signal for displaying the proportion of liquid fuel in the tank is present, when the internal combustion engine is switched off.

## Revendications

1. Appareil de mesure de la part de combustible liquide dans un réservoir de combustible, composé d'un cylindre (2) subdivisé par un piston (3) en deux compartiments partiels (4, 5), dont le premier (4) est raccordé au compartiment de réservoir (1) rempli de gaz, et le second (5) peut être raccordé à une source de pression (9, 20), de sorte que le piston (3) se déplace d'une position de repos définie dans une position extrême sous l'influence de la source de pression (9, 20), la variation de pression dans le compartiment de réservoir (1) rempli de gaz, produite en position de fermeture du réservoir de combustible, étant estimée comme mesure pour le compartiment de réservoir rempli de combustible, et une soupape de régulation de pression (6, 6′), présentant une membrane et deux compartiments à membrane, étant montée dans une conduite reliant le second compartiment partiel (5) à la source de pression (9, 20), cette soupape réglant la pression d'alimentation du second compartiment partiel (5), caractérisé en ce qu'un compartiment à membrane (13) de la soupape de régulation de pression (6, 6') est relié au compartiment de réservoir (1) rempli de gaz, par l'intermédiaire d'une conduite (8 ou 16), pendant la position de repos du piston (3), et peut être hermétiquement fermé par une soupape d'arrêt (15), dans cette conduite (8), pendant le mouvement du piston (3), le compartiment à membrane hermétiquement fermé faisant office de ressort à gaz par rapport au déplacement de la membrane.

2. Appareil suivant la revendication 1, caractérisé en ce que le compartiment à membrane (13) est relié à une conduite (16), reliant le second compartiment partiel (5) à la soupape de régulation de pression (6).

3. Appareil suivant la revendication 1, caractérisé en ce que la source de pression est formée par un accumulateur de pression et/ou de dépression (21), alimenté par une pression inférieure (dépression).

4. Appareil suivant l'une des revendications 1, 2 et 3, caractérisé en ce que la position de la membrane est définie par une vis de réglage (19), pour un compartiment à membrane (13) non fermé de la soupape de régulation de pression (6).

5. Appareil suivant l'une quelconque des revendications précédentes, caractérisé en ce que le piston (3), en position de repos et/ou d'attente de mesure, actionne un clapet d'aération (28, 30) d'un raccord (31), qui débouche à l'atmosphère et/ou dans un réservoir de charbon actif, en réponse à la pression dans le compartiment de réservoir.

6. Appareil suivant l'une quelconque des revendications 1 à 5, caractérisé en ce que, en présence d'un signal de sortie permettant d'indiquer la part de combustible liquide dans le réservoir, le processus de mesure est maintenu sur une période ultérieure, et le déplacement du piston par unité de temps, éventuellement produit, est estimé comme mesure d'une vidange du réservoir de combustible, provoquée par une reprise de combustible pour le moteur à combustion interne, des fuites de combustible du réservoir et des conduites de jonction, et par des fuites de vapeur de combustible sur la soupape d'inversion (7) et les soupapes de sûreté fermées et/ou les conduites d'aération du réservoir de combustible.

7. Appareil suivant la revendication 6, caractérisé en ce que le déplacement du piston par unité de temps et/ou la mesure de la vidange du réservoir sont réduits de la part, correspondante à la consommation de combustible du moteur à combustion interne, calculée dans l'organe de commande.

8. Appareil suivant la revendication 6, caractérisé en ce que le processus de mesure est assuré dans son ensemble, ou uniquement en présence du signal de sortie pour l'indication de la part de combustible liquide dans le réservoir, en position d'arrêt du moteur à combustion interne.
